# EUROPÄISCHE PATENTSCHRIFT

(11) **EP 0 902 731 B1**
(45) Veröffentlichungstag und Bekanntmachung des Hinweises auf die Patenterteilung: **03.04.2002**
(21) Anmeldenummer: 96944001.5
(22) Anmeldetag: 18.12.1996
(51) Int. Cl.: B05D 7/00

(54) **VERFAHREN ZUR HERSTELLUNG VON MEHRSCHICHTIGEN ÜBERZÜGEN**
PROCESS FOR THE PRODUCTION OF MULTILAYERED COATINGS
PROCEDE DE PRODUCTION DE REVETEMENTS MULTICOUCHES

(30) Priorität: 21.12.1995 DE 19547944
(43) Veröffentlichungstag der Anmeldung: 24.03.1999
(73) Patentinhaber: BASF Coatings Aktiengesellschaft, 48165 Münster (DE)
(72) Erfinder: SAPPER, Götz-Ekkehard, Dr., 97222 Rimpar (DE)
(74) Vertreter: Fitzner, Ulrich, Dr.
(86) Internationale Anmeldenummer: EP9605692
(87) Internationale Veröffentlichungsnummer: WO9723306

(56) Entgegenhaltungen:
- US-A- 5 157 069

## Beschreibung

Die vorliegende Erfindung betrifft ein Verfahren zur Herstellung von mehrschichtigen Überzügen auf einer Substratoberfläche bei dem
(A) auf eine mit einem üblichen Füller beschichtete Substratoberfläche eine wäßrige Beschichtungszusammensetzung als Basisbeschichtung, die als filmbildendes Mittel eine wäßrige Polymerdispersion enthält, aufgebracht wird,
(B) auf die so erhaltene Basisschicht eine geeignete transparente Deckbeschichtungszusammensetzung aufgebracht wird und
(C) die Basisschicht zusammen mit der Deckschicht eingebrannt wird,
und lackierte Substrate, die nach diesem Verfahren herstellbar sind.

Aus dem Stand der Technik sind Verfahren zur Lackierung von Fahrzeug- insbesondere Automobilkarosserien bekannt, bei denen das Substrat in der Regel zuerst mit einem Elektrotauchlack und/oder Steinschlagzwischengrund bzw. einer Füllerschicht beschichtet wird und anschließend unter Verwendung eines mindestens ein Pigment enthaltenden Lackes eine Basislackschicht aufgebracht und diese Basislackschicht gegebenenfalls mit einem transparenten Lack überlackiert wird. Die so erhaltene ein- bzw. mehrschichtige Lackierung wird anschließend eingebrannt.

Die zur Herstellung der Basislackschicht verwendeten Basislacke sind üblicherweise Systeme auf Wasser- bzw. Lösungsmittelbasis. Sie enthalten als Hauptbindemittel in der Regel Polyurethan-Dispersionen oder Acrylatdispersionen, kombiniert mit wassermischbaren vemetzbaren Polyestem sowie wassermischbaren Melaminharzen die eine Reihe von Problemen hervorrufen, wie z.B. geringe Lagerstabilität, Neigung zur Vergilbung und instabile Viskosität. Hinzukommt, daß die Polyurethan-Dispersionen bei der Herstellung von Metallic-Lackierungen, z.B. unter Verwendung von Aluminiumbronzen, zu Schwierigkeiten führen. Eine Ausbesserung dieser Überzüge führt zu optisch nicht akzeptablen Ergebnissen.

Der vorliegenden Erfindung liegt die Aufgabe zugrunde, ein Verfahren zur Herstellung von mehrschichtigen Überzügen sowie ein Verfahren zur Ausbesserung von mehrschichtigen Überzügen auf einer Substratoberfläche zur Verfügung zu stellen, worin eine wäßrige Basisbeschichtungszusammensetzung eingesetzt wird, die die zuvor genannten Nachteile nicht aufweist und als Basislack sowohl für Uni- als auch Metall- bzw. Micaeffektlacke geeignet ist. Dieses Überzugsmittel sollte weiterhin mit üblichen Klarlacken, wie z.B. wäßrigen oder Lösemittel-haltigen Klarlacken oder Pulverklarlacken verträglich sein und diese Klarlacke sollten auf den Basislack appliziert werden können, ohne daß es zu einer Verschlechterung des Aussehens des Lacksystems kommt.

Gegenstand der vorliegenden Erfindung ist demgemäß ein Verfahren zur Herstellung eines mehrschichtigen Überzugs auf einer Substratoberfläche, bei dem
(A) auf eine mit einem üblichen Füller beschichtete Substratoberfläche als Basisbeschichtungszusammensetzung eine wäßrige Beschichtungszusammensetzung, die als filmbildendes Mittel eine wäßrige Polymerdispersion enthält, aufgebracht wird,
(B) auf die so erhaltene Basisschicht eine geeignete transparente Deckbeschichtungszusammensetzung aufgebracht wird und
(C) die Basisschicht zusammen mit der Deckschicht eingebrannt wird,
dadurch gekennzeichnet, daß die Basisbeschichtungszusammensetzung eine wäßrige Polymerdispersion enthält, enthaltend
(i) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(ii) einen nicht- assoziativ wirkenden Verdicker, der ein Acrylat-Copolymer auf Basis von (C₁-C₆)-Alkyl(meth)acrylat und (Meth)acrylsäure enthält.

Ein weiterer Gegenstand der vorliegenden Erfindung ist ein Verfahren zur Ausbesserung von mehrschichtigen Lackierungen, worin
(D) eine auf einen üblichen Füller aufgebrachte Basislackschicht mit einer wäßrige Polymerdispersion als filmbildendes Mittel enthaltenden wäßrigen Beschichtungszusammensetzung ausgebessert wird,
(E) die in Stufe (D) erhaltene Beschichtung mit einer geeigneten transparenten Deckbeschichtungszusammensetzung beschichtet wird und
(F) die Basisschicht zusammen mit der Deckschicht eingebrannt wird,
dadurch gekennzeichnet, daß die Basisbeschichtungszusammensetzung eine wäßrige Polymerdispersion enthält, die
(i) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(ii) einen nicht- assoziativ wirkenden Verdicker, der ein Acrylat-Copolymer auf Basis von (C₁-C₆)-Alkyl(meth)acrylat und (Meth)acrylsäure enthält.

Überraschenderweise wurde festgestellt, daß das erfindungsgemäße Verfahren zur Herstellung von mehrschichtigen Überzügen sich sehr gut zur Herstellung von mehrschichtigen Überzügen auf Substraten und zur Ausbesserung von mehrschichtigen Überzügen, insbesondere für Automobilkarosserien, eignet. Auf die Basisbeschichtung können beliebige transparente Lacke aufgebracht werden, beispielsweise wäßrige oder lösemittelhaltige oder auch Pulverlacke, was in den aus dem Stand der Technik bekannten Verfahren nicht möglich ist. Überzüge, die die erfindungsgemäß verwendete Basischicht enthalten, lassen sich bei Beschädigungen problemlos ausbessern.

Das erfindungsgemäß eingesetzte Acrylat-Polymer der Komponente (i) kann als C₁-C₈-Al-kyl(meth)acrylat-Monomereinheiten die linearen und verzweigtkettigen Derivate enthalten, wobei Methyl(meth)acrylat, Ethyl(meth)acrylat, n-Propyl- und iso-Propyl(meth)acrylat, n-Butyl- und iso-Butyl(meth)acrylat und 2-Ethylhexyl(meth)acrylat bevorzugt sind. Als weitere Monomere können auch (Meth)acrylamid-Monomere und deren Derivate enthalten sein.

Als vinylaromatische Monomere, die als Monomereinheiten im Acrylat-Polymer der Komponete (i) vorliegen, können z.B. Styrol, α-Alkylstyrol und Vinyltoluol genannt werden.

Das Acrylat-Polymer kann nach aus dem Stand der Technik bekannten Verfahren, beispielsweise Emulsionspolymerisation, hergestellt werden. Vorzugsweise wird das Acrylat-Polymer in Form einer Dispersion eingesetzt. Während des Herstellverfahrens wird das Mengenverhältnis zwischen den Monomeren und dem Wasser vorzugsweise so eingestellt, daß die resultierende Dispersion einen Feststoffgehalt von 30 bis 60 Gew.-%, vorzugsweise 35 bis 60 Gew.-%, aufweist und direkt zur Herstellung der Basisbeschichtungszusammensetzung eingesetzt werden kann. Ein besonders geeignetes Acrylat-Polymer ist im Handel als wäßrige Dispersion unter der Bezeichnung Acronal 290 D (BASF AG; Ludwigshafen) erhältlich.

Zur Herstellung einer Dispersion des Acrylat-Polymers wird als Emulgator vorzugsweise ein anionischer Emulgator allein oder im Gemisch mit anderen eingesetzt.

Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4 bis 5 Mol Ethylenoxid pro Mol umgesetzten Nonylphenols, Alkyl - oder Arylsulfonats, Natriumlaurylsulfat, Natriumlaurylethoxylatsulfat und sekundäre Natriumalkansulfonate, deren Kohlenstoffkette 8 - 20 Kohlenstoffatome enthält. Die Menge des anionischen Emulgators beträgt 0,1 bis 5,0 Gew.-%, bezogen auf die Monomeren, vorzugsweise 0,5 bis 3,0 Gew.-%. Ferner kann zur Erhöhung der Stabilität der wäßrigen Dispersionen zusätzlich ein nichtionischer Emulgator vom Typ eines ethoxylierten Alkylphenols oder Fettalkohols, z.B. ein Additionsprodukt von 1 Mol Nonylphenol und 4 bis 30 Mol Ethylenoxid in Mischung mit dem anionischen Emutgator eingesetzt werden.

Die Glasübergangstemperatur des Acrylatpolymers liegt vorzugsweise zwischen 15°C und 35°C, besonders bevorzugt zwischen 20°C und 25°C.

Das erfindungsgemäß eingesetzte Acrylatpolymer hat bevorzugt ein Zahlen-mittleres Molmasse (Bestimmung: Gelpermeationschromatographisch mit Polystyrol als Standard) von 200.000 bis 2.000.000, vorzugsweise von 300.000 bis 1.500.000.

Als Verdicker-Komponente (ii) in der Basisbeschichtungszusammensetzung werden erfindungsgemäß Acrylat-Copolymere mit nicht-assoziativ wirkenden Gruppen eingesetzt, die als Monomereinheiten (C₁-C₆)-Alkyl(meth)acrylat und (Meth)acrylsäure enthalten. Ein bevorzugtes Copolymer enthält als Monomereinheiten (Meth)acrylsäure und mindestens zwei unterschiedliche (C₁-C₆)-Alkyl(meth)acrylatmonomere. Im Copolymer liegt die (Meth)acrylsäure bevorzugt in Mengen von 40 Gew -% bis 60 Gew.-%, besonders bevorzugt von 46 Gew.-% bis 55 Gew.-%, bezogen auf die Menge des gesamten Copolymers, vor. Das (C₁-C₆)-Alkyl(meth)acrylatmonmer I ist vorzugsweise in Mengen von 30 Gew.-% bis 50 Gew.-%, insbesondere 36 Gew.-% bis 46 Gew.-%, und das (Meth)acrylatpolymer II vorzugsweise in Mengen von 1 Gew.-% bis 10 Gew.-%, insbesondere 2 Gew.-% bis 8 Gew.-%, jeweils bezogen auf die Menge des gesamten Copolymers, enthalten. Das Rheologiehilfsmittel sollte der Basisbeschichtungszusammensetzung insbesondere bei dem eingesetzten, in der Regel alkalischen pH-Wert die gewünschte Viskosität verleihen. Ein besonders bevorzugter Verdicker ist, wenn er als Dispersion vorliegt, dünnflüssig und verdickt bei neutralem bzw. basischem pH-Wert. Das Acrylat-Copolyer wird der geeigneterweise als fertige Dispersion eingesetzt. Als Emulgatoren enthalten derartige Dispersionen vorzugsweise Fettalkoholalkoxylate, insbesondere C₈-C₂₂-Fettalkoholethoxylate. Eine besonders geeignete Acrylat-Copolymer-Dispersion ist im Handel unter der Bezeichnung Viscalex HV 30 (Allied Corporation, Groß Britannien) erhältlich.

Der Verdicker ist in der erfindungsgemäß verwendeten Basisbeschichtungszusammensetzung vorzugsweise in einer Menge von 0,5 bis 5,0 Gew.-%, insbesondere etwa 0,3 bis 1,5 Gew.-%, bezogen auf den Festkörpergehalt, enthalten. Üblicherweise wird der Verdicker als Dispersion mit einer Konzentration von 5 bis 45 Gew.-%, vorzugsweise von 7 bis 35 Gew.-% eingesetzt.

Die Basisbeschichtungszusamensetzung kann noch weitere Verdicker bzw. Rheologiehilfsmittel, wie ionische Schichtsilikate, Xanthan Gum, Diharnstoffverbindungen, Polyurethanverdicker, Bentonit, Wachse sowie Wachscopolymere enthalten.

Als Hilfsbindemittel kann das erfindungsgemäße Überzugsmittel auch epoxy-funktionelle und/oder carboxyl-funktionelle Bestandteile enthalten, wie übliche Glycidylverbindungen, wie z.B. Glycidylacrylat oder Glycidylmethacrylat. Als carboxyl-funktionelle Vernetzer eignen sich beispielsweise Carbonsäuren, insbesondere gesättigte, geradkettige, aliphatische Dicarbonsäuren mit 3 bis 20 C-Atomen im Molekül, wobei Dodecan-1,12-disäure bevorzugt eingesetzt wird.

Als weiteres Hilfsbindemittel kann auch Polyvinylalkohol eingesetzt werden. Es wurde festgestellt, daß durch den Zusatz von Polyvinylalkohol in einer Menge bis zu 10 Gew.-%, vorzugsweise von 1 bis 5 Gew.-%, die Verträglichkeit mit den auf der Basisbeschichtungszusammensetzung aufgebrachten Deckbeschichtungszusammensetzungen verbessert werden kann. Polyvinylalkohol wirkt Lösemittel-abstoßend, so daß in der Deckbeschichtungszusammensetzung möglicherweise enthaltenes Lösemittel oder andere Komponenten aufgrund der abstoßenden Wirkung des Polyvinylalkhols nicht in die Basisbeschichtungszusammensetzung eindringen und die Farbe verändern können.

Als weitere Vernetzer sind die auf dem Lackgebiet bekannten Vernetzer wie Melamin-Harze einsetzbar, die mit freien OH-Gruppen reagieren können.

Die Basisbeschichtungszusammensetzungen können neben den voranstehend beschriebenen Polymeren noch weitere verträgliche wasserverdünnbare Harze enthalten, wie z.B. Aminoplastharze, Polyester, Polyurethane sowie acrylierte Polyurethane und urethanisierte Acrylate, die als Zusatzmittel zur Erreichung bestimmter lacktechnischer Eigenschaften wie Haftungsverbesserung oder im allgemeinen als Anreibeharze für Pigmente dienen.

Das Hilfsbindemittel und/oder der Vernetzer können in einer Menge bis zu 10 Gew.-%, insbesondere von 0,5 bis 10 Gew.-% eingesetzt werden.

Die erfindungsgemäß eingesetzten Basisbeschichtungszusammensetzungen weisen im allgemeinen einen Festkörpergehalt von etwa 15 bis 60 Gew.-% auf. Der Festkörpergehalt variiert mit dem Verwendungszweck der Beschichtungszusammensetzungen. Für Metalliclacke liegt er beispielsweise bevorzugt bei 12 bis 25 Gew.-%. Für unifarbige Lacke liegt er höher, beispielsweise bei 14 bis 45 Gew.-%.

Zur Neutralisierung der Komponenten (i) und (ii) können Ammoniak und/oder Amine (insbesondere Alkylamine), Aminoalkohole und cyclische Amine, wie Di- und Triethylamin, Aminomethylpropanol, Dimethylaminoethanolamin, Diisopropanolamin, Morpholin, N-Alkyl-morpholin, eingesetzt werden. Für die Neutralisation werden leicht flüchtige Amine bevorzugt. Das wäßrige Überzugsmittel wird üblicherweise auf einen pH-Wert zwischen 6 und 9, vorzugsweise 7 bis 8,5 eingestellt.

Die Basisbeschichtungszusammensetzung kann organische Lösemittel in einer Menge bis zu 15 Gew.-% enthalten. Als organische Lösemittel sind beispielsweise Naphthaline, Benzine und Alkohole geeignet. Als weitere flüssige Komponenten können die erfindungsgemäßen Basislacke Alkylenglykole, wie Ethylenglykol, Propylenglykol, Butylenglykol, Butandiol-1,4, Hexandiol-1,6, Neopentylglykol und andere Diole, wie Dimethylolcyclohexan, enthalten.

Als Pigmente kann die Basisbeschichtungszusammensetzung übliche, zur Lackierung von Automobilkarosserien eingesetzte Pigmente enthalten, wie z.B. Effektpigmente sowie organische und anorganische farbgebende Pigmente.

Beispiele für geeignete Effektpigmente sind handelsübliche Aluminiumbronzen, die gemäß DE-OS 36 36 183 chromatierten Aluminiumbronzen, handelsübliche Edelstahlbronzen sowie andere übliche Metallplättchen und Metallflockenpigmente sowie nichtmetallische Effektpigmente, wie z.B. Perlglanz- bzw. Interferenzpigmente.

Beispiele für geeignete farbgebende Pigmente auf anorganischer Basis sind Titandioxid, Eisenoxide, Ruß u.ä. Beispiele für farbgebende Pigmente auf organischer Basis sind Indanthrenblau, Cromophthalrot, Irgazinorange, Sicotransgelb, Heliogengrün u.ä.

Femer können Korrosionsschutzpigmente, wie z.B. Zinkphospat, enthalten sein.

Zusätzlich kann die Basisbeschichtungszusammensetzung auch auf dem Gebiet der Lackchemie übliche Füllstoffe enthalten. Hierzu zählen Kieselsäure, Magnesiumsilikat, Talkum, Titandioxid und Bariumsulfat.

Der Anteil der Pigmente und Füllstoffe im erfindungsgemäßen Überzugsmittel kann insgesamt 3 bis 25 Gew.-%, bezogen auf den Festkörpergehalt, betragen. Das Pigment kann in beliebiger Weise zugesetzt werden, z.B. als wäßrige Slurry oder als Paste. Die Pigmente können beispielsweise mit einem Anreibeharz, wie einem Hilfsbindemittel, Dispergierhilfsmittel oder Wasser angerieben werden. Bei unifarbenen Lacken ist es bevorzugt, die Pigmente in Dispergierhilfsmittel und Wasser aufzuschlämmen. Werden Aluminium bzw. Flakes eingesetzt, so werden diese ggf. in Lösemittel sowie evtl. einem Gemisch aus Wasser und Netzmittel aufgeschlämmt oder im Hauptbindemittel oder in einem anderen Hilfsbindemittel angerieben.

Die Menge der Komponente (i) kann in Abhängigkeit vom eingesetzten Pigment variieren. Sind die Pigmente organische und/oder anorganische farbgebende Pigmente, so ist die Komponente A vorzugsweise in einer Menge von 25 bis 50 Gew.-%, bezogen auf den Festkörpergehalt, enthalten. Sind die Pigmente Effektpigmente, ist die Komponente A vorzugsweise in einer Menge von 15 bis 30 Gew.-%, bezogen auf den Festkörpergehalt, enthalten.

Als weitere Komponente kann die Basisbeschichtungszusammensetzung Filmbildehilfsmittel enthalten. Als Filmbildehilfsmittel kommen Dicarbonsäuredialkylester, 1,2-Propylenglykol, hochsiedende Benzine und Naphthaline in Betracht, die einen Siedepunkt über 100°C, vorzugsweise über 140°C aufweisen.

Die Basisbeschichtungszusammensetzung kann gegebenenfalls noch weitere Hilfsmittel und Additive enthalten. Beispiele hierfür sind Katalysatoren, Hilfsstoffe, Entschäumungsmittel, Dispersionshilfsmittel, Netzmittel, vorzugsweise carboxy-funktionelle Dispergiermittel, Antioxidantien, UV-Absorber, Radikalfänger, Verlaufsmittel, Biozide und/oder Wasserrückhaltemittel.

Die Basisbeschichtungszusammensetzung wird auf eine mit einem üblichen Füller beschichtete Substratoberfläche aufgebracht. Als Füller kann jeder beliebige aus dem Stand der Technik bekannte Füller eingesetzt werden.

Nach der Füllerapplikation wird die oben beschriebene Basisbeschichtungszusammensetzung in an sich bekannter Weise, beispielsweise durch Spritzen, Streichen, Tauchen, Fluten, Rakeln oder Walzen auf das Substrat, wie z.B. Metall, Kunststoff, Holz oder Glas aufgebracht.

Die Basisbeschichtungszusammensetzung kann gegebenenfalls vor Aufbringen auf die Füllerschicht noch mit Wasser zur Einstellung des Festkörpergehaltes, Lösungsmittel oder Rheologiehilfsmittel zur Einstellung der anwendungstechnischen Eigenschaften sowie ggf. eine Base zur pH-Regulierung versetzt werden. Sollte die Viskosität noch nicht in dem gewünschten Bereich liegen, so kann erneut Rheologiehilfsmittel (ii) oder weiterer Verdicker, ggf. in einer Menge von 0,001 bis 0,006 Gew.-%, bezogen auf den Festkörpergehalt, zugesetzt werden.

Die in Stufe (A) auf das Substrat aufgebrachte Basisschicht wird erfindungsgemäß in Stufe (B) mit einer geeigneten transparenten Deckbeschichtung überlackiert. Vor dem Auftragen der transparenten Deckbeschichtung läßt man das Überzugsmittel vorteilhafterweise kurz abdunsten, vorzugsweise 1 bis 15 Minuten, insbesondere 4 bis 8 Minuten, bei einer Temperatur von 60 bis 100°C, vorzugsweise von 70 bis 85°C. Der Zeitraum des Abdunstens hängt von der Temperatur ab und ist über weite Bereiche einstellbar.

Besonders beständige mehrschichtige Überzüge können erhalten werden, wenn das in Stufe (A) erhaltene Substrat vor dem Aufbringen der Deckbeschichtung angetrocknet wird, so daß eine ausreichende Verfilmung bzw. Vernetzung vorliegt, so daß Wasser und/oder Lösungsmittel, die ggf. in der in Stufe (B) aufgebrachten Deckbeschichtungszusammensetzung enthalten sind, nicht in die Basischicht diffundieren können.

Als transparente Deckbeschichtung können alle üblichen Deckbeschichtungen aufgebracht werden. Bevorzugt werden die auf dem Gebiet der Lackchemie verwendeten Klarlacke, wie z.B. Klarlacke auf Wasser- oder Lösemittelbasis, Pulverklarlacke, Pulverslurry-Klarlacke, lösemittelhaltige und wäßrige Zweikomponenten-Klarlacke usw. eingesetzt werden.

Die transparente Deckbeschichtung kann nach üblichen im Stand der Technik bekannten Verfahren aufgebracht werden.

Gegenstand der vorliegenden Erfindung ist demgemäß auch ein mehrschichtig beschichtetes Substrat, wobei der Überzug auf die Substratoberfläche aufgebracht wird, indem
(A) auf eine mit einem üblichen Füller beschichtete Substratoberfläche als Basisbeschichtungszusammensetzung eine wäßrige Beschichtungszusammensetzung, die als filmbildendes Mittel eine wäßrige Polymerdispersion enthält, aufgebracht wird,
(B) auf die so erhaltene Basisschicht eine geeignete transparente Deckbeschichtungszusammensetzung aufgebracht wird und
(C) die Basisschicht zusammen mit der Deckschicht eingebrannt wird,
dadurch gekennzeichnet, daß die Basisbeschichtungszusammensetzung eine wäßrige Polymerdispersion enthält, enthaltend
(i) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(ii) einen nicht- assoziativ wirkenden Verdicker, der ein Acrylat-Copolymer auf Basis von (C₁-C₆)-Alkyl(meth)acrylat und (Meth)acrylsäure enthält.

Bei der Ausbesserung von mehrschichtigen Lackierungen ist es möglich, die Basisbeschichtungszusammensetzung ohne spezielle Hilfsmittel auf die auszubessernde Substratoberfläche aufzutragen. Die Beschichtungszusammensetzung kann bei Umgebungstemperatur ausgehärtet werden. Bei Härtung bei Umgebungstemperatur verlängert sich die obengenannte Einbrennzeit entsprechend, sie liegt etwa zwischen 15 und 24 Stunden. Ein besonderes Hilfsmittel bzw. eine spezielle Vorrichtung zum Aushärten dieser Beschichtungszusammensetzung ist somit nicht erforderlich.

### Beispiele

### Beispiel 1

A. In einem Reaktionsgefäß wurden 22 Gewichtsteile Wasser, 2 Gewichtsteile Solvesso® 200 (C₁₀-C₁₃-Aromatengemisch) und 1 Gewichtsteil Butylglykol vorgelegt. Unter Rühren wurden 30 Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.
   Der pH-Wert des erhaltenen Gemisches wurde mit Dimethylethanolamin (DMEA) auf 8,0 eingestellt.
C. In einem separaten Mischer wurde eine Mischung aus 5 Gewichtsteilen Aluminium-flakes und 5 Gewichtsteilen Butylglykol glatt gerührt.

Unter starkem Rühren wurde die in C. erhaltene Aluminiumaufschlämmung portionsweise in das in B. erhaltene Gemisch gegeben.

Die Viskosität des erhaltenen Lackes wurde mit 25 Gewichtsteilen Wasser auf 110 mPas eingestellt. Der Festkörpergehalt betrug 18,85 %.

### Beispiel 2

A. In einem Reaktionsgefäß wurden 22 Gewichtsteile Wasser, 2 Gewichtsteile Solvesso® 200 (C₁₀-C₁₃-Aromatengemisch) und 1 Gewichtsteil Butylglykol vorgelegt. Unter Rühren wurden 25 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.
   Der pH-Wert des erhaltenen Gemisches wurde mit 0,4 Gewichtsteilen Dimethylethanolamin (DMEA) auf 8,0 eingestellt.
C. In einem separaten Mischer wurde eine Mischung aus 5 Gewichtsteilen Aluminium-flakes und 5 Gewichtsteilen Butylglykol glatt gerührt.
D. In einem weiteren separaten Mischer wurden 5 Gewichtsteile Glycidylmethacrylat-Dodecandisäure in 25 Gewichtsteilen Wasser dispergiert und auf eine Teilchengröße von kleiner als 5 µm gemahlen.

Zu der in D erhaltenen Dispersion wurde unter starkem Rühren das in B erhaltene Gemisch eingerührt.

Anschließend wurde die in C erhaltene Aluminiumaufschlämmung portionsweise in das erhaltene Gemisch gegeben.

Die Viskosität des erhaltenen Lackes wurde mit 25 Gewichtsteilen Wasser auf 110 mPas eingestellt. Der Festkörpergehalt betrug 18,35 %.

### Beispiel 3

Es wurde nach der in Beispiel 2 beschriebenen Verfahrensweise eine Lackzubereitung hergestellt, mit der Ausnahme, daß in Schritt D 10 Gewichtsteile Glycidylmethacrylat/Dodecandisäure in 20 Gewichtsteilen Wasser dispergiert wurden.

Der Festkörpergehalt betrug 20,35 %.

### Beispiel 4

A. In einem Reaktionsgefäß wurden 22 Gewichtsteile Wasser, 2 Gewichtsteile Solvesso® 200 (C₁₀-C₁₃-Aromatengemisch) und 1 Gewichtsteil Butylglykol vorgelegt. Unter Rühren wurden 30 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.
   Der pH-Wert des erhaltenen Gemisches wurde mit 0,4 Gewichtsteilen Dimethylethanolamin (DMEA) auf 8,0 eingestellt.
C. In einem separaten Mischer wurde eine Mischung aus 5 Gewichtsteilen Aluminium-flakes und 5 Gewichtsteilen Butylglykol glatt gerührt.
D. In einem weiteren separaten Mischer wurden 10 Gewichtsteile eines Polyesters, der erhalten wurde aus 9,8 Gew.-% Neopentylglykol, 6,2 Gew.-% Hexahydrophthalsäure, 22,9 Gew.-% Pripol® (Handelsprodukt der Fa. Unichema), 11,1 Gew.-% Hexandiol und 2,0 Gew.-% Xylol als Lösungsmittel, und 2,2 Gewichtsteile Melamin Cymel® 303(Cyanamid) in 12,8 Gewichtsteilen Wasser dispergiert.

Zu der in D erhaltenen Dispersion wurde unter starkem Rühren das in B erhaltene Gemisch eingerührt.

Anschließend wurde die in C erhaltene Aluminiumaufschlämmung portionsweise in das erhaltene Gemisch gegeben.

Der Festkörpergehalt des Lackes betrug 26,83 %.

### Beispiel 5

A. In einem Reaktionsgefäß wurden 22 Gewichtsteile Wasser, 2 Gewichtsteile Lusolvan FBH® (Handelsprodukt der BASF AG, Ludwigshafen) und 1 Gewichtsteil Butylglykol vorgelegt. Unter Rühren wurden 30 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.
   Der pH-Wert des erhaltenen Gemisches wurde mit Dimethylethanolamin (DMEA) auf 8,0 eingestellt.
C. Zu dem in Schritt B erhaltenen Gemisch wurden 30 Gewichtsteile einer Irgazinrot® DPP BO-Paste (Pigmentgehalt 43,2 Gew.-%) gegeben und glattgerührt.

Die Viskosität des erhaltenen Lackes wurde mit 5 Gewichtsteilen Wasser auf 110 mPas eingestellt.

### Beispiel 6

A. In einem Reaktionsgefäß wurden 22 Gewichtsteile Wasser, 2 Gewichtsteile Lusolvan FBH® (Handelsprodukt der BASF AG, Ludwigshafen) und 1 Gewichtsteil Butylglykol vorgelegt. Unter Rühren wurden 25 Gewichtsteile Gewichtsteile Acronal 290 D (wäßrige Dispersion, Festkörpergehalt 50,0 %) zugegeben.
B. Zu dem in A erhaltenen Gemisch wurde langsam ein Gemisch aus 7,6 Gewichtsteilen Wasser und 2 Gewichtsteile Viscalex HV 30 (Festkörpergehalt 30,6 %) gegeben.
   Der pH-Wert des erhaltenen Gemisches wurde mit Dimethylethanolamin (DMEA) auf 8,0 eingestellt.
C. In einem separaten Mischer wurden 28,79 Gewichtsteile einer Irgazinrot® DPP BO-Paste (Pigmentgehalt 43,2 Gew.-%), 1,17 Gewichtsteile Disperbyk® 190 (Dispergierhilfsmittel) und 0,03 Gewichtsteile des in Schritt B eingesetzten Copolymers dispergiert und auf eine Teilchengröße unter 5µm gemahlen.
D. In einem weiteren separaten Mischer wurden 5 Gewichtsteile Glycidylmethacrylat/Dodecandisäure in 25 Gewichtsteilen Wasser dispergiert und auf eine Teilchengröße von kleiner als 5 µm gemahlen.

Zu der in D erhaltenen Dispersion wurde unter starkem Rühren das in B erhaltene Gemisch eingerührt.

Anschließend wurde die in C erhaltene Pigmentpaste portionsweise in das erhaltene Gemisch gegeben.

Der Festkörpergehalt betrug 28,06 %.

### Beispiel 7

Die in Beispiel 6 beschriebene Verfahrensweise wurde wiederholt, außer daß in Schritt A 20 Gewichtsteile der Acrylatdispersion und in Schritt D 10 Gewichtsteile Glycidymethacrylat/Dodecandisäure eingesetzt wurden.

### Beispiel 8

A. In einem Reaktionsgefäß wurden 22 Gewichtsteile Wasser, 2 Gewichtsteile Lusolvan FBH® (Handelsprodukt der BASF AG, Ludwigshafen) und 1 Gewichtsteil Butylglykol vorgelegt. Unter Rühren wurden 15 Gewichtsteile Acronal 290 D (wäßrige Dispersion, Festkörpergehalt 50,0 %) Acrylatdispersion zugegeben.
B. Zu dem in A erhaltenen Gemisch wurde langsam ein Gemisch aus 7,6 Gewichtsteilen Wasser und 2 Gewichtsteilen Viscalex HV 30 (Festkörpergehalt 30,6 %) gegeben.
   Der pH-Wert des erhaltenen Gemisches wurde mit Dimethylethanolamin (DMEA) auf 8,0 eingestellt.
C. In einem separaten Mischer wurden 28,79 Gewichtsteile einer Irgazinrot® DPP BO-Paste (Pigmentgehalt 43,2 Gew.-%), 1,17 Gewichtsteile Disperbyk® 190 und 0,03 Gewichtsteile des in Schritt B eingesetzten Copolymers dispergiert und auf eine Teilchengröße unter 5µm gemahlen.
D. In einem weiteren separaten Mischer wurden 10 Gewichtsteile eines Polyesters, der erhalten wurde aus 9,8 Gew.-% Neopentylglykol, 6,2 Gew.-% Hexahydrophthalsäure, 22,9 Gew.-% Pripol® (Handelsprodukt der Fa. Unichema), 11,1 Gew.-% Hexandiol und 2,0 Gew.-% Xylol als Lösungsmittel, und 2,2 Gewichtsteile Melamin Cymel® 303 (Cyanamid) in 12,8 Gewichtsteilen Wasser dispergiert.

Zu der in D erhaltenen Dispersion wurde unter starkem Rühren das in B erhaltene Gemisch eingerührt. Anschließend wurde die in Schritt B hergestellt Pigmentzubereitung eingerührt.

Der Festkörpergehalt betrug 29,04 %.

## Patentansprüche

1. Verfahren zur Herstellung eines mehrschichtigen Überzugs auf einer Substratoberfläche, bei dem
(A) auf eine mit einem üblichen Füller beschichtete Substratoberfläche als Basisbeschichtungszusammensetzung eine wäßrige Beschichtungszusammensetzung, die als filmbildendes Mittel eine wäßrige Polymerdispersion enthält, aufgebracht wird,
(B) auf die so erhaltene Basisschicht eine geeignete transparente Deckbeschichtungszusammensetzung aufgebracht wird und
(C) die Basisschicht zusammen mit der Deckschicht eingebrannt wird,
**dadurch gekennzeichnet, daß** die Basisbeschichtungszusammensetzung eine wäßrige Polymerdispersion enthält, enthaltend
(i) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(ii) einen nicht- assoziativ wirkenden Verdicker, der ein Acrylat-Copolymer auf Basis von (C₁-C₆)-Alkyl(meth)acrylat und (Meth)acrylsäure enthält.

2. Verfahren zur Ausbesserung von mehrschichtigen Lackierungen, worin
(D) eine auf einen üblichen Füller aufgebrachte Basislackschicht mit einer wäßrige Polymerdispersion als filmbildendes Mittel enthaltenden wäßrigen Beschichtungszusammensetzung ausgebessert wird,
(E) die in Stufe (D) erhaltene Beschichtung mit einer geeigneten transparenten Deckbeschichtungszusammensetzung beschichtet wird und
(F) die Basisschicht zusammen mit der Deckschicht eingebrannt wird,
**dadurch gekennzeichnet, daß** die Basisbeschichtungszusammensetzung eine wäßrige Polymerdispersion enthält, enthaltend
(i) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(ii) einen nicht- assoziativ wirkenden Verdicker, der ein Acrylat-Copolymer auf Basis von (C₁-C₆)-Alkyl(meth)acrylat und (Meth)acrylsäure enthält.

3. Verfahren nach Anspruch 1 oder 2, **dadurch gekennzeichnet, daß** als C₁-C₈-Alkyl(meth)acrylat-Monomere der Komponente (i) Methyl(meth)acrylat, Ethyl(meth)acrylat, Butyl(meth)acrylat und 2-Ethylhexyl(meth)acrylat eingesetzt werden.

4. Verfahren nach einem der Ansprüche 1 bis 3, **dadurch gekennzeichnet, daß** als vinylaromatische Monomere Styrol, α-Alkylstyrol und Vinyltoluol eingesetzt werden.

5. Verfahren nach einem der Ansprüche 1 bis 4, **dadurch gekennzeichnet, daß** die Komponente (i) in Form einer Dispersion mit einem Feststoffgehalt von 30 bis 60 Gew.-%, vorzugsweise 35 bis 60 Gew.-%, eingesetzt wird.

6. Verfahren nach einem der Ansprüche 1 bis 5, **dadurch gekennzeichnet, daß** das Acrylat-Copolymer der Komponente (ii) als Monomereinheiten (Meth)acrylsäure und mindestens zwei unterschiedliche Acrylatmonomere enthält, wobei die (Meth)acrylsäure bevorzugt in Mengen von 40 Gew.-% bis 60 Gew.-%, besonders bevorzugt von 46 Gew.-% bis 55 Gew.-%, bezogen auf die Menge des gesamten Copolymers, enthalten ist und das (C₁-C₆)-Alkyl(meth)acrylatmonmer I vorzugsweise in Mengen von 30 Gew.-% bis 50 Gew.-%, insbesondere 36 Gew.-% bis 46 Gew.-%, und das (Meth)acrylatpolymer II vorzugsweise in Mengen von 1 Gew.-% bis 10 Gew.-%, insbesondere 2 Gew.-% bis 8 Gew.-%, jeweils bezogen auf die Menge des gesamten Copolymers, enthalten sind.

7. Verfahren nach einem der Ansprüche 1 bis 6, **dadurch gekennzeichnet, daß** als weiteres Bindemittel epoxy-funktionelle Verbindungen, insbesondere Glycidylverbindungen, und/oder carboxyl-funktionelle Verbindungen, insbesondere gesättigte, geradkettige, aliphatische Dicarbonsäuren mit 3 bis 20 C-Atomen im Molekül, enthalten sind.

8. Verfahren nach einem der Ansprüche 1 bis 7, **dadurch gekennzeichnet, daß** von 5 bis 25 Gew.-% Effektpigmente, organische und/oder anorganische farbgebende Pigmente enthalten sind.

9. Verfahren nach Anspruch 8, **dadurch gekennzeichnet, daß** organische und/oder anorganische farbgebende Pigmente und die Komponente A in einer Menge von 25 bis 50 Gew.-%, bezogen auf den Festkörpergehalt, enthalten sind.

10. Verfahren nach Anspruch 8, **dadurch gekennzeichnet, daß** Effektpigmente und die Komponente A in einer Menge von 15 bis 30 Gew.-%, bezogen auf den Festkörpergehalt, enthalten.

11. Verfahren nach einem der Ansprüche 1 bis 10, **dadurch gekennzeichnet, daß** als transparente Deckbeschichtungszusammensetzung in den Stufen (B) und (E) Klarlacke auf Wasser- oder Lösemittebasis, Pulverklarlacke, Pulverslurry-Klarlacke, lösemittelhaltige und wäßrige Zweikomponenten-Klarlacke eingesetzt werden.

12. Mehrschichtig beschichtetes Substrat, wobei der Überzug auf die Substratoberfläche aufgebracht wird, indem
(A) auf eine mit einem üblichen Füller beschichtete Substratoberfläche als Basisbeschichtungszusammensetzung eine wäßrige Beschichtungszusammensetzung, die als filmbildendes Mittel eine wäßrige Polymerdispersion enthält, aufgebracht wird,
(B) auf die so erhaltene Basisschicht eine geeignete transparente Deckbeschichtungszusammensetzung aufgebracht wird und
(C) die Basisschicht zusammen mit der Deckschicht eingebrannt wird,
**dadurch gekennzeichnet, daß** die Basisbeschichtungszusammensetzung eine wäßrige Polymerdispersion enthält, enthaltend
(i) ein Acrylat-Polymer auf Basis von 30 bis 60 Gew.-% C₁-C₈-Alkyl(meth)acrylat- Monomeren, 30 bis 60 Gew.-% vinylaromatischen Monomeren und 0,5 bis 10 Gew.-% (Meth)acrylsäure und
(ii) einen nicht- assoziativ wirkenden Verdicker, der ein Acrylat-Copolymer auf Basis von (C₁-C₆)-Alkyl(meth)acrylat und (Meth)acrylsäure enthält.

## Claims

1. Process for producing a multilayer coating on a substrate surface, in which
(A) an aqueous coating composition comprising as film-forming agent an aqueous polymer dispersion is applied as basecoat composition to a substrate surface coated with a customary primer surfacer,
(B) a suitable transparent topcoat composition is applied to the basecoat thus obtained, and
(C) the basecoat is baked together with the topcoat,
**characterized in that** the basecoat composition comprises an aqueous polymer dispersion comprising
(i) an acrylate polymer based on from 30 to 60 % by weight of C₁-C₈-alkyl (meth)acrylate monomers, from 30 to 60 % by weight of vinyl-aromatic monomers and from 0.5 to 10 % by weight of (meth)acrylic acid, and
(ii) a thickener comprising an acrylate copolymer based on (C₁-C₆)alkyl (meth)acrylate and (meth)acrylic acid and with a non-associative action.

2. Process for repairing multilayer coatings, in which
(D) a basecoat applied to a customary primer surfacer is repaired with an aqueous coating composition containing aqueous polymer dispersion as film-forming agent,
(E) the coating obtained in step (D) is coated with a suitable transparent topcoat composition, and
(F) the basecoat is baked together with the topcoat,
**characterized in that** the basecoat composition comprises an aqueous polymer dispersion comprising
(i) an acrylate polymer based on from 30 to 60 % by weight of C₁-C₈-alkyl (meth)acrylate monomers, from 30 to 60 % by weight of vinyl-aromatic monomers and from 0.5 to 10 % by weight of (meth)acrylic acid, and
(ii) a thickener comprising an acrylate copolymer based on (C₁-C₆)alkyl (meth)acrylate and (meth)acrylic acid and with a non-associative action.

3. Process according to Claim 1 or 2, **characterized in that** methyl (meth)acrylate, ethyl (meth)acrylate, butyl (meth)acrylate and 2-ethylhexyl (meth)acrylate are employed as C₁-C₈-alkyl (meth)acrylate monomers of component (i).

4. Process according to any one of claims 1 to 3, **characterized in that** styrene, α-alkylstyrene and vinyltoluene are employed as vinyl-aromatic monomers.

5. Process according to any one of Claims 1 to 4, **characterized in that** component (i) is used in the form of a dispersion having a solids content of from 30 to 60% by weight, preferably from 35 to 60% by weight.

6. Process according to any one of Claims 1 to 5, **characterized in that** the acrylate copolymer of component (ii) comprises as its monomer units (meth)acrylic acid and at least two different acrylate monomers, the (meth)acrylic acid being present in amounts of from 40% by weight to 60% by weight, with particular preference from 46% by weight to 55% by weight, based on the amount of the overall copolymer, and the C₁-C₆ alkyl (meth)acrylate monomer I being present preferably in amounts of from 30% by weight to 50% by weight, in particular from 36% by weight to 46% by weight, and the (meth)acrylate polymer [sic] II being present preferably in amounts of from 1% by weight to 10% by weight, in particular from 2% by weight to 8% by weight, based in each case on the amount of overall copolymer.

7. Process according to any one of claims 1 to 6, **characterized in that** epoxy-functional compounds, especially glycidyl compounds, and/or carboxyl-functional compounds, especially saturated, straight-chain, aliphatic dicarboxylic acids with 3 to 20 carbon atoms in the molecule, are present as additional binder.

8. Process according to any one of claims 1 to 7, **characterized in that** from 5 to 25 % by weight of special-effect pigments, organic and/or inorganic colour-imparting pigments are present.

9. Process according to Claim 8, **characterized in that** organic and/or inorganic colour-imparting pigments and component A in an amount of from 25 to 50 % by weight, based on the solids content, are present.

10. Process according to Claim 8, **characterized in that** special-effect pigments and component A in an amount of from 15 to 30 % by weight, based on the solids content, are present.

11. Process according to any one of claims 1 to 10, **characterized in that** waterborne or solventborne clearcoats, transparent powder coatings, transparent powder slurry coatings, solvent-containing and aqueous two-component clearcoats are employed as transparent topcoat compositions in steps (B) and (E).

12. Multilayer-coated substrate, where the coating is applied to the substrate surface, such that
(A) an aqueous coating composition comprising as film-forming agent an aqueous polymer dispersion is applied as basecoat composition to a substrate surface coated with a customary primer surfacer,
(B) a suitable transparent topcoat composition is applied to the basecoat thus obtained, and
(C) the basecoat is baked together with the topcoat,
**characterized in that** the basecoat composition comprises an aqueous polymer dispersion comprising
(i) an acrylate polymer based on from 30 to 60 % by weight of C₁-C₈-alkyl (meth)acrylate monomers, from 30 to 60 % by weight of vinyl-aromatic monomers and from 0.5 to 10 % by weight of (meth)acrylic acid, and
(ii) a thickener comprising an acrylate copolymer based on (C₁-C₆)alkyl (meth)acrylate and (meth)acrylic acid and with a non-associative action.

## Revendications

1. Procédé pour la production d'un revêtement multicouche à la surface d'un subjectile, dans lequel
(A) à la surface d'un subjectile, revêtue d'un apprêt garnissant usuel, on applique en tant que composition de revêtement de base une composition aqueuse de revêtement qui contient comme agent filmogène une dispersion aqueuse de polymère,
(B) on applique sur la couche de base ainsi obtenue une composition transparente, appropriée, de revêtement de finition, et
(C) la couche de base, conjointement avec la couche de finition, est séchée au four,
**caractérisé en ce que** la composition de revêtement de base contient une dispersion aqueuse de polymère contenant
(I) un polymère d'acrylate à base de 30 à 60% en poids de monomères (méth)acrylate d'alkyle en C₁-C₈, de 30 à 60% en poids de monomères vinylaromatiques et de 0,5 à 10% en poids d'acide (méth)acrylique, et
(II) un épaississant à effet non associatif, qui contient un copolymère d'acrylate à base de (méth)acrylate d'alkyle en C₁-C₆ et d'acide (méth)acrylique.

2. Procédé pour la retouche de peintures multicouches, dans lequel
(D) on retouche une couche de peinture de base appliquée sur un apprêt garnissant usuel, à l'aide d'une composition aqueuse de revêtement contenant comme agent filmogène une dispersion aqueuse de polymère,
(E) le revêtement obtenu dans l'étape (D) est revêtu avec une composition transparente, appropriée, de revêtement de finition, et
(F) la couche de base, conjointement avec la couche de finition, est séchée au four,
**caractérisé en ce que** la composition de revêtement de base contient une dispersion aqueuse de polymère contenant
(I) un polymère d'acrylate à base de 30 à 60% en poids de monomères (méth)acrylate d'alkyle en C₁-C₈, de 30 à 60% en poids de monomères vinylaromatiques et de 0,5 à 10% en poids d'acide (méth)acrylique, et
(II) un épaississant à effet non associatif, qui contient un copolymère d'acrylate à base de (méth)acrylate d'alkyle en C₁-C₆ et d'acide (méth)acrylique.

3. Procédé selon la revendication 1 ou 2, **caractérisé en ce qu'**on utilise comme monomères (méth)acrylate d'alkyle en C₁-C₈ du composant (I) le (méth)acrylate de méthyle, le (méth)acrylate d'éthyle, le (méth)acrylate de butyle et le (méth)acrylate de 2-éthylhexyle.

4. Procédé selon l'une quelconque des revendications 1 à 3, **caractérisé en ce qu'**on utilise comme monomères vinylaromatiques le styrène, un α-alkylstyrène et le vinyltoluène.

5. Procédé selon l'une quelconque des revendications 1 à 4, **caractérisé en ce qu'**on utilise le composant (I) sous forme d'une dispersion ayant une teneur en matière solide de 30 à 60% en poids, de préférence de 35 à 60% en poids.

6. Procédé selon l'une quelconque des revendications 1 à 5, **caractérisé en ce que** le copolymère acrylate du composant (II) contient comme motifs monomères de l'acide (méth)acrylique et au moins deux monomères acrylate différents, l'acide (méth)acrylique étant contenu de préférence en proportions de 40% en poids à 60% en poids, de façon particulièrement préférée, de 46% en poids à 55% en poids, par rapport à la quantité du copolymère total, et le monomère (méth)acrylate d'alkyle en C₁-C₆ I étant contenu de préférence en proportions de 30% en poids à 50% en poids, en particulier de 36% en poids à 46% en poids, et le polymère (méth)acrylate II étant contenu de préférence en proportions de 1% en poids à 10% en poids, en particulier de 2% en poids à 8% en poids, dans chaque cas par rapport à la quantité du copolymère total.

7. Procédé selon l'une quelconque des revendications 1 à 6, **caractérisé en ce que** comme autre liant sont contenus des composés à fonction époxy, en particulier des composés glycidyliques, et/ou des composés à fonction carboxy, en particulier des acides dicarboxyliques aliphatiques saturés à chaîne droite, ayant de 3 à 20 atomes de carbone par molécule.

8. Procédé selon l'une quelconque des revendications 1 à 7, **caractérisé en ce que** sont contenus de 5 à 25% en poids de pigments à effet, de pigments colorants minéraux et/ou organiques.

9. Procédé selon la revendication 8, **caractérisé en ce que** les pigments colorants minéraux et/ou organiques et le composant A sont contenus en une proportion de 25 à 50% en poids, par rapport à la teneur en matière solide.

10. Procédé selon la revendication 8, **caractérisé en ce que** les pigments à effet et le composant A sont contenus en une proportion de 15 à 30% en poids, par rapport à la teneur en matière solide.

11. Procédé selon l'une quelconque des revendications 1 à 10, **caractérisé en ce qu'**on utilise comme composition transparente de revêtement de finition dans les étapes (B) et (E) des vernis à base aqueuse ou de solvant, des vernis en poudre, des vernis en suspension de poudre, des vernis à deux composants, aqueux et contenant un solvant.

12. Subjectile revêtu de plusieurs couches , le revêtement étant appliqué à la surface du subjectile par
(A) application en tant que composition de revêtement de base, sur une surface d'un subjectile, revêtue d'un apprêt garnissant usuel, d'une composition aqueuse de revêtement qui contient comme agent filmogène une dispersion aqueuse de polymère,
(B) application, sur la couche de base ainsi obtenue, d'une composition appropriée, transparente, de revêtement de finition et
(C) séchage au four de la couche de base conjointement avec la couche de finition,
**caractérisé en ce que** la composition de revêtement de base contient une dispersion aqueuse de polymère contenant
(I) un polymère d'acrylate à base de 30 à 60% en poids de monomères (méth)acrylate d'alkyle en C₁-C₈, de 30 à 60% en poids de monomères vinylaromatiques et de 0,5 à 10% en poids d'acide (méth)acrylique, et
(II) un épaississant à effet non associatif, qui contient un copolymère d'acrylate à base de (méth)acrylate d'alkyle en C₁-C₆ et d'acide (méth)acrylique.
